# EUROPÄISCHE PATENTSCHRIFT

(11) **EP 1 079 991 B1**
(45) Veröffentlichungstag und Bekanntmachung des Hinweises auf die Patenterteilung: **02.10.2002**
(21) Anmeldenummer: 99920520.6
(22) Anmeldetag: 22.05.1999
(51) Int. Cl.: B60R 13/08, B32B 3/12, G10K 11/16, E04C 2/36

(54) **AKUSTISCH WIRKSAMER ISOLATIONSBELAG FÜR FAHRZEUGE**
ACOUSTICALLY EFFECTIVE INSULATING LINING FOR MOTOR VEHICLES
GARNITURE ISOLANTE PHONIQUE POUR VEHICULE

(30) Priorität: 22.05.1998 CH 111798
(43) Veröffentlichungstag der Anmeldung: 07.03.2001
(73) Patentinhaber: RIETER AUTOMOTIVE (INTERNATIONAL) AG, 8702 Zollikon (CH)
(72) Erfinder: RENAULT, Eric, F-78410 Aubergenville (FR)
(74) Vertreter: Graf, Seifert & Partner
(86) Internationale Anmeldenummer: CH9900223
(87) Internationale Veröffentlichungsnummer: WO99061284

(56) Entgegenhaltungen:
- EP-A- 0 824 066
- GB-A- 1 353 468
- GB-A- 1 373 063
- GB-A- 2 314 526

## Beschreibung

Die vorliegende Erfindung betrifft einen Isolationsbelag, insbesondere einen Bodenbelag zur akustischen Isolation von Karosserieteilen.

Akustisch wirksame Isolationsbeläge finden ihre Anwendung im Fahrzeugbau, insbesondere bei Traktoren oder anderen Nutzfahrzeugen, wo Bodenbleche, Ladeflächen, Kofferräume, usw. mit Isolationsbelägen versehen werden, um den von diesen Karosserieteilen abgestrahlten Lärmpegel zu reduzieren. Massnahmen zur Reduktion der Schallabstrahlung in den Fahrzeuginnenraum sind von besonderer Bedeutung, da die durch den Lärm auftretenden Beeinträchtigungen anerkanntermassen zu subjektivem Unwohlsein, beispielsweise Kopfschmerzen, Herzklopfen oder erhöhtem Blutdruck führen können. Es ist deshalb das Bestreben der modernen Fahrzeugindustrie, den Geräuschpegel der Fahrzeuge so weit wie möglich zu reduzieren.

Die bekannten Massnahmen zur Reduktion des von vibrierenden Karosserieteilen erzeugten Lärmpegels beschränken sich heutzutage im wesentlichen auf zwei Massnahmen:
a) Versteifung und Schwingungsdämpfung der fraglichen Karosserieteile durch aufgeklebte bzw. aufgeschmolzene biegesteife und dissipativ wirkende Dämpfungsschichten;
b) Belegung der bedämpften oder nackten Karosserieteile mit einem sogenannten Feder-Masse-System, d.h. einem Belag aus porösem und elastischem Material (Vlies oder Schaum) mit einer darauf angebrachten Schwerschicht. Solche Beläge werden fahrzeuginnenseitig oft mit einer Dekor- oder Teppichschicht versehen.

Im allgemeinen werden für die Federschicht poröse Materialien mit einem möglichst kleinen Elastizitätsmodul und für die Masse- resp. Schwerschicht ein gefüllter PU-Schaum verwendet. Diese Schallisolationsbeläge bestehen aus mehreren Schichten mit unterschiedlichen Materialien, was die Herstellung und das Rezyklieren dieser Beläge erschwert resp. verteuert.

Diese Isolationsbeläge sind in der Regel wärme- und nässeempfindlich, wenig robust und eignen sich nur schlecht für die Verwendung in offenen Fahrzeugen, bspw. für die Landwirtschaft, oder an Baumaschinen. Darüberhinaus werden in der Fahrzeugindustrie enge Grenzen für den verwendbaren Raum des gesamten Isolationssystems und die damit verbundene zusätzliche Massenbelegung vorgegeben.

Das vorveröffentlichte Dokument GB-A-1 353 468 zeigt einen Isolationsbelag mit drei unterschiedliche Zonen: eine erste Zone umfasst eine Deckschicht, eine zweite Zone bestehend aus einer Vielzahl offener Zellen und eine dritte Zone mit noppenartigen Abstandselemente.

Es ist daher Aufgabe der vorliegenden Erfindung, einen Schallisolationsbelag zu schaffen, welcher die Nachteile der bekannten Schallisolationssysteme nicht aufweist.

Insbesondere ist es die Aufgabe der vorliegenden Erfindung, einen Isolationsbelag zu schaffen, welcher aus einem einzigen Material und in einem einzelnen Formvorgang gefertigt werden kann, um gegenüber den herkömmlichen Schallisolationssystemen eine kostengünstigere Herstellung zu erreichen.

Erfindungsgemäss wird diese Aufgabe durch einen Isolationsbelag mit den Merkmalen des Anspruchs 1 gelöst. Insbesondere ist der Kern der Erfindung darin zu sehen, dass der Isolationsbelag drei unterschiedliche funktionelle Zonen aufweist: eine erste Zone (A) umfasst eine Deckschicht, die dem gesamten Bauteil seine Stabilität und Trittfestigkeit verleiht und als Masseschicht des erfindungsgemässen Feder-Masse-Systems dient; eine zweite Zone (B), bestehend aus einer Vielzahl von offenen Zellen, deren Zellenwände und umschlossene Luft die Funktion einer elastischen Feder des Feder-Masse-Systems übernehmen, eine dritte Zone (C), welche die zweite Zone (B) und deren Zellenschicht mit Hilfe von kleinen Abstandselementen von einem zu isolierenden Karosserieteil beabstanden. Die Querschnittsfläche eines jeden dieser Abstandselementes ist dabei wesentlich kleiner als die Querschnittsfläche der die Zellen bildenden Zellenwände. Es versteht sich, dass die Deckschicht oben mit einem Muster versehen sein kann und aus einem abriebfesten Material gefertigt ist.

Der vorliegenden Erfindung liegt des weiteren die Erkenntnis zugrunde, dass die schallabsorbierende und schallisolierende Wirkung innerhalb des Isolationsbelags wesentlich verbessert werden kann, wenn die Luftströmung in der Zone (C), d.h. zwischen dem schwingfähigen Karosserieteil und der Zellenschicht, Reibverlust erfährt. Zu diesem Zweck sind in der dritten Zone, im folgenden auch Abstandszone genannt, ausschliesslich kleinste Abstützelemente angeordnet, deren Querschnittsfläche wesentlich kleiner ist als die Querschnittsfläche der Zellenwände. Damit wird in der dritten Zone ein kontrollierbarer lateraler Luftströmungswiderstand erzeugt, der zu einer zusätzlichen Energiedissipation führt. Die hier im Blickpunkt stehende Schallabstrahlung in Kraftfahrzeugen, in Schienenfahrzeugen oder Maschinen wird durch Biegeschwingungen der Karosseriebleche erzeugt. Beim Schwingen der Karosserieteile wird in der Luft oberhalb der aufschwingenden Bereiche derselben, ein lokaler Überdruck erzeugt, während oberhalb der benachbarten abschwingenden Bereiche ein Unterdruck erzeugt wird. Wegen der erfindungsgemäss ermöglichten lateralen Luftströmung in der dritten Zone, kommt es zum teilweisen Druckausgleich zwischen den Überdruck- und Unterdruckbereichen. Dies hat zur Folge, dass auch ein geringerer Druckaufbau in der Luftsäule oberhalb der aufschwingenden Bereiche und eine verminderte Beschleunigung in der ersten Zone des Isolationsbelages erzeugt wird. Entsprechendes gilt auch für die abschwingenden Karosseriebereiche.

Weitere besonders vorteilhafte Ausgestaltungen des erfindungsgemässen Isolationsbelags werden durch die Merkmale der Unteransprüche gekennzeichnet.

Insbesondere weist eine bevorzugte Ausführungsform der Zellenschicht des Isolationsbelag eine Vielzahl von Zellen mit einer quadratischen Grundfläche von ca. 42 x 42 mm² auf. In einer weiteren bevorzugten Ausführungsform sind die Abstandselemente an den Kreuzungsstellen der Zellenwände angeordnet und weisen eine Querschnittsfläche von bis zu 5 mm² und eine Höhe von 1 bis 4 mm auf. Die Zellenwände sind aus Kautschuk oder PU und weisen eine Dicke von 2 mm und eine Höhe von bis zu 18 mm auf.

Bei einer besonderen Ausführungsform weist mindestens ein Teil der Zellenwände zwischen benachbarten Abstandselementen mindestens eine Ausnehmung auf. Damit kann der laterale Luftströmungswiderstand in einfacher Weise reguliert, resp. optimiert werden. Diese Ausnehmungen weisen eine Höhe (B') von bis zu 4 mm auf. Die Breite (D) dieser Ausnehmungen und der Abstand (E) zwischen benachbarten Abstandselementen stehen bei einer bevorzugten Ausführungsform in einem Verhältnis von 3 : 4.

In einer besonders vorteilhaften Ausführungsform sind alle Zonen, und insbesondere der gesamte Isolationsbelag aus einem einzigen Material gefertigt und werden die gewünschten physikalischen Eigenschaften durch eine geeignete Formgebung, resp. Dimensionierung der einzelnen Zonen erzielt. Insbesondere können die einzelnen Zonen unterschiedliche Dichten aufweisen. Damit zeichnet sich der erfindungsgemässe Isolationsbelag nicht nur durch seine guten akustischen Eigenschaften, seine Robustheit und einfache Rezyklierbarkeit, sondern auch durch eine besonders wirtschaftliche Herstellungsweise aus.

Erfindungsgemäss wird also ein witterungsbeständiger Isolationsbelag geschaffen, welcher gegenüber bekannten Schallisolationssystemen eine in einfacher Weise optimierbare akustische Wirksamkeit, insbesondere in den in offenen Fahrzeugen stark störenden Frequenzbereichen, aufweist.

Diese Eigenschaften können ohne zusätzliche Schichten erzielt werden.

Viele andere Ausführungsformen liegen im Bereich des normalen fachmännischen Handelns und ergeben sich für den Fachmann aus der aufgezeigten Lehre ohne sein erfinderisches Dazutun.

Anhand der in den Figuren dargestellten beispielshaften Ausführungsformen soll die Erfindung näher erläuter werden.

Es zeigen:
- Fig.1: eine perspektivische Darstellung des erfindungsgemässen Isolationsbelags;
- Fig.2: eine Ausführungvariante des erfindungsgemässen Isolationsbelags;
- Fig.3: eine Darstellung mit Vergleichsmessungen der frequenzabhängigen Schallisolationswirkung.

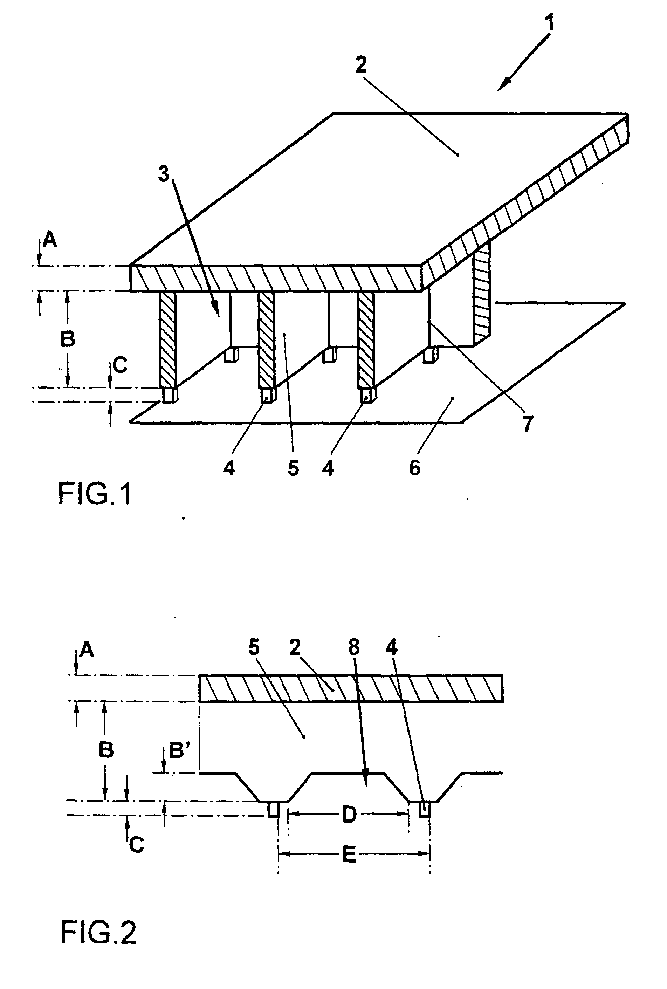

Der in Fig. 1 dargestellte Isolationsbelag 1 umfasst drei übereinanderliegende Zonen A, B und C, von der jede besondere akustische Wirkungen aufweist, und deren Kombination zu einer überraschend guten Isolationswirkung führt.

Die erste Zone A umfasst eine Deckschicht 2, die im wesentlichen als Schwerschicht wirkt. Die zweite Zone B umfasst eine aus Zellen 3 aufgebaute Zellenschicht, deren dissipative Wirkung im wesentlichen durch die vikoelastischen Zellenwände 5 gewährleistet wird. Erfindungsgemäss umfasst die dritte Zone C an ihrer Auflageseite eine Vielzahl noppenartiger Abstützelemente 4, welche die zweite Zone B des Isolationbelags 1 vom Karosserieteil 6 distanzieren. Dabei weisen die Abstandselemente 4 gegenüber den die Zellen 3 bildenden Zellenwänden 5 derart kleine geometrische Abmessungen auf, dass sie eine laterale Luftströmung entlang der Auflagefläche zwischen Karosserieteil 6 und des Isolationsbelags 1 erlauben. Diese Zone C erlaubt einerseits einen lateralen Druckausgleich zwischen unterschiedlichen Druckbereichen oberhalb des schwingenden Karosserieteils und erzeugt Reibungsverluste in der lateral strömenden Luft.

In einer bevorzugten Ausführungsform weist der Isolationsbelag 1 in den drei Zonen A, B und C die folgenden geometrischen Abmessungen auf:
Die Deckschicht 2 ist wenige Millimeter dick und an die Anforderungen an die zu erzielende Tragfähigkeit respektive Abrieb und Schalldämmung/-isolation angepasst. Die Zone B wird im vorliegenden Beispiel durch Zellen 3 gebildet, deren Zellenwände 5 ca. 2 mm dick sind und eine Höhe von 18 mm aufweisen. Die Zellenquerschnittsform in diesem Ausführungsbeispiel ist quadratisch und hat ein Rastermass von 42 mm.

Die Form der Abstandselemente 4 im bevorzugten Ausführungsbeispiel ist zylindrisch mit einem Durchmesser von 2 mm. Dabei ist jedes Abstandselement 4 an den Kreuzungsstellen 7 der Zellenwände 5 angeordnet.

In einer zweiten Ausführungsform, die in Fig. 2 dargestellt ist, weisen die Zellenwände 5 zwischen benachbarten Abstandselementen 4 Ausnehmungen 8 mit einer Höhe B' von 4 mm auf, deren Breite D etwa drei Viertel des Abstandes E zwischen benachbarten Abstandselementen ausmacht. Mittels derartiger Ausnehmungen 8 kann der Isolationseffekt des Isolationsbelags 1 in einfacher und kostengünstiger Weise anwendungsspezifisch optimiert werden.

Obwohl die dargestellten Ausführungsformen besondere geometrische Abmessungen und Formen, wie beispielsweise die zylindrische Form der Abstandselemente 4, aufweisen, liegen für den Fachmann auch andere Abmessungen und Formgebungen im Bereich seines gewöhnlichen technischen Handelns.

Besonders vorteilhaft ist, dass der erfindungsgemässe Isolationsbelag 1 aus einem einzigen Material herstellbar ist, womit über die hervorragenden akustischen Eigenschaften hinaus auch dem Aspekt einer wirtschaftlich optimierten Fertigung Rechnung getragen wird. Wie dem Fachmann bekannt ist, finden üblicherweise Faservliese aus natürlichen und künstlichen Fasern oder Schwerschäume, beispielsweise aus Kautschuk oder PUR-Schaum, Verwendung für die Herstellung von herkömmlichen Isolationsbelägen. Alle derartigen Materialien lassen sich für den erfindungsgemässen Isolationsbelag verwenden. Die besondere Materialwahl liegt im Ermessen des Fachmanns. Dieser wird aus der ihm bekannten Vielfalt ein seinen Zwecken entspechendes Material auswählen und in geeigneter Weise dimensionieren. Typische Flächengewichte derartiger Isolationsbeläge liegen um 10 kg/m².

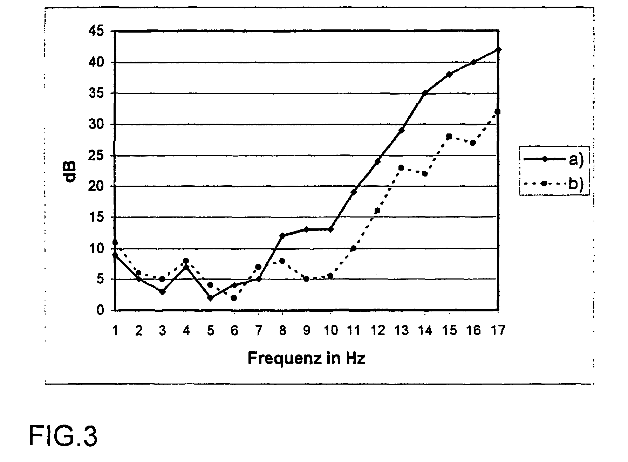

Fig. 3 zeigt den durch die erfindungsgemässen Isolationsbelag erzielte Wirkung anhand zweier Messkurven. Die Messkurve b) zeigt den frequenzabhängigen Verlauf der Isolationswirkung für ein klassisches Isolationssystem, bestehend aus einer Deckschicht (A) mit einer darunter angeordneten Zellenschicht (B), dessen Flächengewicht 8.2 kg/m² beträgt. Diese Messkurve zeigt einen typischen Verlauf für derartige Isolationssysteme. Demgegenüber zeigt die Kurve a) das frequenzabhängige Verhalten eines erfindungsgemässen Isolationsbelags, ebenfalls aus Kautschuk, aber mit einem Flächengewicht von 7.9 kg/m². Diese ist damit leichter als das obengenannte, herkömmliche Isolationssystem. Obwohl beide Messkurven im niederfreuquenten Bereich annähernd gleiches Verhalten zeigen, so ist doch die Isolation oberhalb von 450 Hz beim erfindungsgemässen Isolationsbelag signifikant besser.

Es versteht sich, dass das Wesen der Erfindung nicht auf die gezeigten Ausführungsformen beschränkt ist. So ist es ebenfalls, ohne den Kern der Erfindung zu verlassen, denkbar, mehr als eine Ausnehmung 8 zwischen benachbarten Abstandselementen 4 in einer Zellenwand 5 anzuordnen. So sind beispielsweise beiderseits eines Abstandselementes 4 zusätzliche Ausnehmungen 8 denkbar, mit denen das akustische Verhalten aufgrund geänderter Federwirkung gezielt beeinflussbar ist.

Des weiteren können die Abstandselemente 4 ohne den Erfindungsgedanken zu verlassen an den Zellenwänden 5 zwischen ihren Kreuzungsstellen 7 angeordnet sein, was das Schwingungsverhalten für besondere Anwendungsfälle in gewünschter Art verändert. Die Anpassung einer solchen Veränderung an eine gewünschte Schwingungscharakteristik liegt im Bereich fachmännischen Handelns. Selbstverständlich kann auch die Form der einzelnen Zellen der Zellenschicht 5 anders gestaltet werden. Insbesondere können diese auch drei- oder mehreckige Querschnittsflächen, oder Kombinationen davon, aufweisen. Die Form der Abstandselemente kann ebenfalls zylindrisch, konisch, sphärisch oder eckig sein. Die Dimensionierung der Zellen und Zellenwände wird der Fachmann abhängig vom verwendeten Material und seinen Zwecken in geeigneter Weise anpassen.

Neben den erzielbaren akustischen Effekten erweist sich die einfache Herstellungsweise - nämlich mit lediglich einem Formvorgang - als besonders vorteilhaft. Insbesondere kann der erfindungsgemässe Isolationsbelag als Press- oder Formteil durch Formpressen, Druck- oder Spritzgiessen hergestellt werden. In einer Weiterbildung des erfindungsgemässen Isolationsbelags werden bei der Herstellung die einzelnen Zonen unterschiedlich stark verdichtet. Damit kann die Fertigung des erfindungsgemässen Isolationsteils besonderen Erfordernissen in einfacher Weise angepasst werden.

## Patentansprüche

1. Isolationsbelag in Form eines Feder-Masse-Systems, insbesondere Bodenbelag (1) zur akustischen Isolation von Karosserieteilen, welcher Isolationsbelag drei unterschiedliche funktionelle Zonen aufweist: eine erste Zone (A) umfasst eine Deckschicht, die dem gesamten Bauteil seine Stabilität und Trittfestigkeit verleiht und als Masseschicht eines Feder-Masse-Systems dient; eine zweite Zone (B), bestehend aus einer Vielzahl offener Zellen, deren Zellwände und umschlossene Luft die Funktion einer elastischen Feder des Feder-Masse-Systems übernehmen; eine dritte Zone (C) mit noppenartigen Abstandselementen (4), um die zweite Zone (B) und deren Zellenschicht bei aufgelegtem Isolationsbelag von der Auflagefläche, insbesondere dem Karosserieteil (6) zu beabstanden.

2. Isolationsbelag (1) nach Anspruch 1, **dadurch gekennzeichnet, dass** die Zellen (3) eine Grundfläche von ca. 42 x 42 mm² aufweisen.

3. Isolationsbelag (1) nach einem der Ansprüche 1 oder 2, **dadurch gekennzeichnet, dass** die Abstandselemente (4) an Kreuzungsstellen (7) der Zellenwände (5) angeordnet sind.

4. Isolationsbelag (1) nach einem der Ansprüche 1 bis 3, **dadurch gekennzeichnet, dass** die Abstandselemente (4) eine Querschnittsfläche von bis zu 5 mm² und eine Höhe von 1 bis 4 mm aufweisen.

5. Isolationsbelag (1) nach einem der Ansprüche 1 bis 4, **dadurch gekennzeichnet, dass** die Zellenwände (5) eine Dicke von 2 mm und eine Höhe (B) von bis zu 18 mm aufweisen.

6. Isolationsbelag (1) nach einem der Ansprüche 1 bis 5, **dadurch gekennzeichnet, dass** mindestens ein Teil der Zellenwände (5) zwischen benachbarten Abstandselementen (4) mindestens eine Ausnehmung (8) aufweisen.

7. Isolationsbelag (1) nach Anspruch 6, **dadurch gekennzeichnet, dass** die Ausnehmung (8) eine Höhe (B') von bis zu 4 mm aufweist, und dass die Breite (D) der Ausnehmung zum Abstand (E) zwischen benachbarten Abstandselementen (4) im Verhältnis 3 : 4 steht.

8. Isolationsbelag (1) nach einem der vorhergehenden Ansprüche, **dadurch gekennzeichnet, dass** die Deckschicht (2), die Zellenschicht (3) und die Abstandselemente (4) aus demselben Material gefertigt sind.

9. Isolationsbelag nach Anspruch 8, **dadurch gekennzeichnet, dass** die Deckschicht (2), die Zellenschicht (3) und/oder die Abstandselemente (4) eine unterschiedliche Dichte aufweisen.

10. Verwendung eines Isolationsbelags gemäss Anspruch 1 in Fahrzeugen, an Maschinen oder in Gebäuden.

## Claims

1. Insulating covering in the form of a spring-mass system, in particular floor covering (1) for acoustic insulation of vehicle car body parts, which insulating covering comprises three different functional zones: a first zone (A) comprises a top layer which lends stability and non-crushability to the entire component and serves as mass layer for the spring-mass system; a second zone (B) consisting of a plurality of open cells, the cell walls and enclosed air of which assume the function of a resilient spring for the spring-mass system; a third zone (C) with knob-type spacer elements (4), for separating the second zone (B) and the cellular layer thereof from the bearing surface, in particular the car body part (6), when the insulating covering is in place.

2. Insulating covering (1) according to claim 1, **characterised in that** the cells (3) exhibit a base approximately 42 x 42 mm².

3. Insulating covering (1) according to one of claims 1 or 2, **characterised in that** the spacer elements (4) are arranged at points of intersection (7) of the cell walls (5).

4. Insulating covering (1) according to one of claims 1 to 3, **characterised in that** the spacer elements (4) have a cross-sectional area of up to 5 mm² and a height of from 1 to 4 mm.

5. Insulating covering (1) according to one of claims 1 to 4, **characterised in that** the cell walls (5) exhibit a thickness of 2 mm and a height (B) of up to 18 mm.

6. Insulating covering (1) according to one of claims 1 to 5, **characterised in that** at least some of the cell walls (5) between adjacent spacer elements (4) comprise at least one recess (8).

7. Insulating covering (1) according to claim 6, **characterised in that** the recess (8) exhibits a height (B') of up to 4 mm and **in that** the ratio of the width (D) of the recess to the distance (E) between adjacent spacer elements (4) is 3 : 4.

8. Insulating covering (1) according to one of the preceding claims, **characterised in that** the top layer (2), the cellular layer (3) and the spacer elements (4) are made of the same material.

9. Insulating covering according to claim 8, **characterised in that** the top layer (2), the cellular layer (3) and/or the spacer elements (4) exhibit different densities.

10. Use of an insulating covering according to claim 1 in vehicles, machines or in buildings.

## Revendications

1. Revêtement isolant sous forme d'un système ressort-masse, en particulier revêtement de fond (1) destiné à l'isolation acoustique de parties de la carrosserie, le revêtement isolant comportant trois zones fonctionnelles différentes : une première zone (A) englobant une couche de couverture, conférant à l'ensemble du composant sa stabilité et sa résistance aux chocs et faisant fonction de couche de masse d'un système ressort-masse ; une deuxième zone (B) composée de nombreux alvéoles ouverts, dont les parois alvéolaires et l'air qui y est renfermé servent de ressort élastique du système ressort-masse ; une troisième zone (C) comportant des éléments d'écartement sous forme de noppes (4) en vue d'écarter la deuxième zone (B) et les parois alvéolaires correspondantes de la surface d'appui, en particulier de la partie de la carrosserie (6) lors de l'application du revêtement isolant.

2. Revêtement isolant (1) selon la revendication 1, **caractérisé en ce que** les alvéoles (3) ont une surface de base d'environ 42 x 42 mm².

3. Revêtement isolant (1) selon l'une des revendications 1 ou 2, **caractérisé en ce que** les éléments d'écartement (4) sont agencés au niveau des points de croisement (7) des parois alvéolaires (5).

4. Revêtement isolant (1) selon l'une des revendications 1 à 3, **caractérisé en ce que** les éléments d'écartement (4) ont une surface de section transversale atteignant 5 mm² et une hauteur comprise entre 1 et 4 mm.

5. Revêtement isolant (1) selon l'une des revendications 1 à 4, **caractérisé en ce que** les parois alvéolaires (5) ont une épaisseur de 2 mm et une hauteur (B) atteignant 18 mm.

6. Revêtement isolant (1) selon l'une des revendications 1 à 5, **caractérisé en ce qu'**au moins une partie des parois alvéolaires (5) comporte au moins un évidement (8) entre les éléments d'écartement adjacents (4).

7. Revêtement isolant (1) selon la revendication 6, **caractérisé en ce que** l'évidement (8) a une hauteur (B') maximale de 4 mm, un rapport de 3:4 étant établi entre la largeur (D) de l'évidement et la distance (E) entre les éléments d'écartement adjacents (4).

8. Revêtement isolant (1) selon l'une des revendications précédentes, **caractérisé en ce que** la couche de couverture (2), la couche alvéolaire (3) et les éléments d'écartement (4) sont fabriqués à partir du même matériau.

9. Revêtement isolant selon la revendication 8, **caractérisé en ce que** la couche de couverture (2), la couche alvéolaire (3) et/ou les éléments d'écartement (4) ont une densité différente.

10. Utilisation d'un revêtement isolant selon la revendication 1 dans des véhicules, des machines ou des immeubles.
